# EUROPEAN PATENT SPECIFICATION

(11) **EP 0 870 125 B1**
(45) Date of publication and mention of the grant of the patent: **21.03.2001**
(21) Application number: 97900339.9
(22) Date of filing: 14.01.1997
(51) Int. Cl.: F16D 65/12

(54) **VENTILATED BRAKE DISC WITH VIBRATION SUPPRESSION**
BELÜFTETE BREMSSCHEIBE MIT SCHWINGUNGSUNTERDRÜCKUNG
FREIN A DISQUE VENTILE AVEC SUPPRESSION DES VIBRATIONS

(30) Priority: 17.01.1996 GB 9600891
(43) Date of publication of application: 14.10.1998
(73) Proprietor: Federal-Mogul Technology Limited, Rugby, Warwickshire CV22 7SB (GB)
(72) Inventor: THORPE, William, Anthony, Burbage, Leicestershire LE10 2AW (GB)
(74) Representative: Drury, Peter Lawrence
(86) International application number: GB9700090
(87) International publication number: WO9726464

(56) References cited:
- EP-A- 0 524 521
- DE-A- 2 901 349
- US-A- 4 523 666

## Description

This invention is concerned with disc brake rotors.

A disc brake rotor is arranged to rotate with a member, such as a wheel of a vehicle or a rotating part of a machine. Such a rotor provides two oppositely-facing annular friction surfaces which, in the operation of the brake, are engaged by blocks of friction material to decelerate the rotor and hence the member. Two of the friction material blocks are moved (usually by hydraulic means) towards one another into contact with the two friction surfaces so that frictional forces occur slowing the rotation of said rotor, and hence of said member. These frictional forces generate considerable amounts of heat which has to be absorbed by the rotor and causes its temperature to rise. If the rotor becomes too hot, the braking performance is adversely affected and the rotor and the blocks wear rapidly. Thus, such rotors need to have a significant thermal capacity and a significant ability to dissipate heat in order to reduce the maximum temperature reached.

In order to reduce temperature rises in disc brake rotors, it is conventional in high performance brakes to form the rotor so that it comprises a first generally disc-shaped portion which provides one of said annular surfaces, and a second generally disc-shaped portion which provides the other of said annular surfaces. Said first and second portions are arranged in spaced parallel relationship. These portions are joined by vanes between which are cooling ducts extending radially outwardly of the rotor. The cooling ducts are arranged so that, as the rotor is rotated, air passes through the ducts and acts to cool said portions of the rotor on their opposite sides to said annular surfaces. Air inlets to said ducts are provided between inner edges of said first and second portions and the rotor functions as a centrifugal fan driving air outwardly to outlets at the outer edges of said portions.

A problem with disc brake rotors is that, during a brake application, such rotors may vibrate. Such vibration may result in undesirable noise or in unpleasant vibrations being passed through the vehicle's structure to occupants. Disc brake rotors exhibit tendencies to vibrate by axial movement of the surfaces engaged by the friction material with nodes and antinodes of the vibration extending along diameters of the disc. Many of the possible modes of vibration are symmetrical with 4, 6, 8 etc. antinodes.

It is known e.g. from document US-A-4 523 666 to reduce the number of possible modes of vibration by reducing the symmetry thereof by providing an odd number of vanes, eg a prime number. This measure has only limited success since it does not disrupt the essential symmetry of the material distribution around the disc.

It is an object of the present invention to provide a disc brake rotor in which asymmetry is increased.

The invention provides a disc brake rotor arranged to rotate with a member and providing two oppositely-facing annular friction surfaces which, in the operation of the brake, are engaged by blocks of friction material to decelerate the rotor and hence the member, the rotor comprising a first portion which provides one of said annular surfaces, and a second portion which provides the other of said annular surfaces, said first and second portions being arranged in spaced parallel relationship and being joined by vanes between which are defined cooling ducts extending radially outwardly of the rotor, the ducts being arranged so that, as the rotor is rotated, air passes through the ducts and acts to cool the rotor, characterised in that the rotor defines air inlet ports passing through said first and said second portions thereof in areas which are radially inward of said vanes, the air inlet ports being arranged to communicate with said ducts, the number of said ports which pass through said first portion of the rotor being different to the number of said ports which pass through said second portion.

In a rotor according to the invention, the different numbers of ports passing through the first and the second portions causes greater asymmetry and thereby reduces the number of possible vibration modes. The ports in each of the first and the second portions can be distributed uniformly about the central axis of the rotor, thereby retaining balance of the rotor.

In order to further reduce the possible modes of vibration of the rotor, it is preferred that the number of ports in each of said first and second portions is an odd number, more preferably a prime number.

The ports may be of any desired shape, eg circular or oval. They may be entirely surrounded by the material of said first and second portions of the rotor or may be provided by slots projecting radially outwardly from inner edges of said portions.

Preferably, in order to equalise air flow, the total area of the inlet ports passing through the first portion of the rotor is substantially equal to the total area of the inlet ports passing through the second portion of the rotor.

Preferably, in order to further increase asymmetry, the number of vanes is a different number to the number of ports in either of the first or the second portion of the rotor. The number of vanes may be a prime number.

There now follows a detailed description, to be read with reference to the accompanying drawings, of a disc brake rotor which is illustrative of the invention.

In the drawings:
Figure 1 is a side elevational view of the illustrative rotor; and
Figure 2 is a composite cross-sectional view taken on the line X-X in Figure 1.

The illustrative disc brake rotor 10 is made of cast iron and is arranged to rotate with a member, in this case a wheel (not shown) of a vehicle. The rotor 10 comprises a first portion 12 and a second portion 14 which provide two oppositely-facing annular friction surfaces 16 and 18 which, in the operation of the brake, are engaged by blocks of friction material (not shown) to decelerate the rotor 10 and hence the wheel. The surface 16 is provided by the first portion 12 while the surface 18 is provided by the second portion 14.

Each of the portions 12 and 14 of the rotor 10 is in the form of an annular plate extending around a central axis 20 of the rotor 10. The portions 12 and 14 are arranged in spaced parallel relationship to one another with the surfaces 16 and 18 extending radially of the axis 20 and facing in opposite directions. At their radially inner edges, the portions 12 and 14 are joined by four bosses 22 which extend between the portions 12 and 14. The bosses 22 are uniformly spaced about the axis 20 and project radially inwardly of the portions 12 and 14 to terminate at a surface 23 which is arcuate about the axis 20. Each boss 22 defines a hole 24 through which the rotor 10 can be bolted to a hub (not shown) of an axle. The bosses 24 are cast integrally with the portions 12 and 14. The rotor 10 can be bolted to a hub with either of its portions 12 and 14 engaging the hub, thereby enabling the rotor to be used on either side of a vehicle.

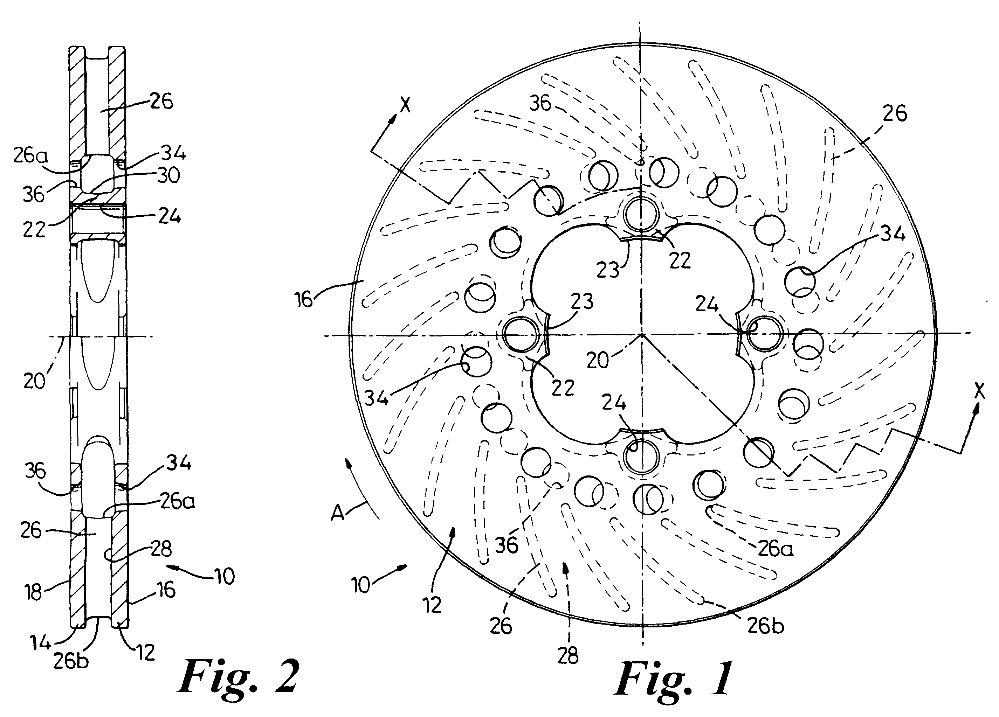

The portions 12 and 14 are also joined by a plurality of vanes 26 which are also cast integrally with the portions 12 and 14 and extend between them. In order to reduce the number of modes of vibration of the rotor 10, the number of vanes 26 is an odd number, preferably a prime number; in this case, there are twenty-three vanes. As can be seen in Figure 1, the vanes 26 are uniformly distributed about the axis 20 and divide the space between the portions 12 and 14 into twenty-three cooling ducts 28. The ducts 28 extend radially outwardly of the rotor 10 and are arranged so that, as the rotor is rotated, air passes through the ducts 28 and acts to cool the rotor 10. Each duct 28 is bounded by an inner surface of the portion 12, an inner surface of the portion 14, and by two adjacent vanes 26. Each vane 26 has a curved form and extends between an inner edge 26a thereof and an outer edge 26b thereof. The inner edges 26a of the vanes are all at the same distance from the axis 20, this distance being greater than the radial outward extent of the bosses 22 so that air can pass between the bosses 22 and the inner edges 26a. The outer edges 26b are all at the same distance from the axis 20 and are adjacent to the outer edges of the portions 12 and 14. The vanes 26 are swept backwardly relative to the direction of rotation of the rotor 10 which is indicated by the arrow A in Figure 1. Although the rotor 10 has curved backwardly-swept vanes, the invention is also applicable to rotors with forwardly-swept or straight vanes.

The ducts 28 have their inlets between their inner edges 26a. These inlets communicate with a generally annular chamber 30 formed between the portions 12 and 14, inwardly of the edges 26a and outwardly of the bosses 22. The chamber 30 can receive air through the gaps between the bosses 22 and also through air inlet ports 34 and 36 which are defined by the rotor 10.

The inlet ports 34 pass through said first portion 12 of the rotor 10 and the inlet ports 36 pass through the second portion 14 thereof. The ports 34 and 36 are in areas which are radially inward of said vanes 26 so that they communicate with the chamber 30 and hence with said ducts 26. The inlet ports 34 and 36 are all in the form of circular holes, the ports 34 all being of the same diameter and the ports 36 all being of the same diameter but different to that of the ports 34. Specifically, the diameter of each inlet port 34 has a diameter of 12.7 mm while each port 36 has a diameter of 12 mm. There are seventeen of the ports 34 uniformly distributed in a circle about the axis 20. There are nineteen of the ports 36 uniformly distributed in a circle about the axis 20 of the same diameter as the circle on which the ports 34 lie. Thus, the number of vanes 26, the number of ports 34, and the number of ports 36 are all prime numbers and are all different. Although the ports 34 and 36 pass axially through the portions 12 and 14, respectively, it is also possible for these ports to pass through at an outwardly-directed angle, eg 45°.

The diameters of the ports 34 and 36 was selected so that the total area of the ports 34 (17 x π x (12.7)² x 0.25 = 2154 mm²) was substantially equal to the total area of the ports 36 (19 x π x (12)² x 0.25 = 2149 mm²).

In the operation of the rotor 10, it is bolted to a hub (the surfaces 23 of the bosses 22 serving to guide the rotor into position) and rotated in the direction of the arrow A in Figure 1. It will be apparent that the rotor 10, although asymmetric as a result of the ports 34 and 36, is symmetrical in its external shape and can be bolted to a hub with either the portion 12 or the portion 14 against the hub, which portion is against the hub being selected to give backwardly-curved vanes 62 in the direction of rotation. Rotation of the rotor 10 causes air to enter into the chamber 30 through the gaps between the bosses 22 (on one side of the rotor only as the other side is against the hub) and through the ports 34 and 36. The air then enters the ducts 28 between the inner edges 26a of the vanes 26. The air is accelerated along the ducts 28 cooling the rotor 10 and exits between the outer edges 26b. It is found that the rotor 10 is less susceptible to vibration than a similar rotor which has equal numbers of air inlet ports in each of its first and second portions.

## Claims

1. A disc brake rotor (10) arranged to rotate with a member and providing two oppositely-facing annular friction surfaces (16, 18) which, in the operation of the brake, are engaged by blocks of friction material to decelerate the rotor and hence the member, the rotor comprising a first portion (12) which provides one of said annular surfaces, and a second portion (14) which provides the other of said annular surfaces, said first and second portions being arranged in spaced parallel relationship and being joined by vanes (26) between which are defined cooling ducts (28) extending radially outwardly of the rotor, the ducts being arranged so that, as the rotor is rotated, air passes through the ducts and acts to cool the rotor, characterised in that the rotor defines air inlet ports (34, 36) passing through said first and said second portions thereof in areas which are radially inward of said vanes, the air inlet ports being arranged to communicate with said ducts, the number of said ports (34) which pass through said first portion of the rotor being different to the number of said ports (36) which pass through said second portion.

2. A rotor according to claim 1, characterised in that the number of ports (34, 36) in each of said first (12) and second (14) portions is an odd number.

3. A rotor according to claim 2, characterised in that the number of ports (34, 36) in each of said first (12) and second (14) portions is a prime number.

4. A rotor according to any one of claims 1 to 3, characterised in that the total area of the inlet ports (34) passing through the first portion (12) of the rotor is substantially equal to the total area of the inlet ports (36) passing through the second portion (14) of the rotor.

5. A rotor according to any one of claims 1 to 4, characterised in that the number of vanes (26) is a different number to the number of ports (34, 36) in either of the first (12) or the second portion (36) of the rotor.

6. A rotor according to claim 5, wherein the number of vanes (26) is a prime number.

## Patentansprüche

1. Scheibenbremsenrotor (10), welcher für eine Rotation mit einem Glied bzw. Element angeordnet ist und welcher zwei entgegengesetzt gerichtete, ringförmige Reibungsoberflächen (16, 18) zur Verfügung stellt, welche im Betrieb der Bremse durch Blöcke aus Reibungsmaterial ergriffen sind, um den Rotor und somit das Glied abzubremsen, wobei der Rotor einen ersten Abschnitt (12), welcher eine der ringförmigen Oberflächen zur Verfügung stellt, und einen zweiten Abschnitt (14) umfaßt, welcher die andere der ringförmigen Oberflächen zur Verfügung stellt, wobei der erste und zweite Abschnitt in einer voneinander beabstandeten, parallelen Beziehung angeordnet sind und durch Flügel bzw. Schaufeln (26) verbunden sind, zwischen welchen Kühlkanäle bzw. -leitungen (28) definiert sind, welche sich radial nach auswärts aus dem Rotor erstrecken, wobei die Kanäle so angeordnet sind, daß, wenn der Rotor gedreht wird, Luft durch die Kanäle durchtritt und für eine Kühlung des Rotors wirkt, dadurch gekennzeichnet, daß der Rotor Lufteinlaßöffnungen (34, 36) definiert, welche durch den ersten und zweiten Abschnitt desselben in Bereichen bzw. Flächen durchtreten, welche radial einwärts von den Schaufeln liegen, wobei die Lufteinlaßöffnungen angeordnet sind, um mit den Kanälen in Verbindung zu stehen, wobei die Anzahl der Öffnungen (34), welche durch den ersten Abschnitt des Rotors hindurchtreten, unterschiedlich ist von der Anzahl der Öffnungen (36), welche durch den zweiten Abschnitt hindurchtreten.

2. Rotor nach Anspruch 1, dadurch gekennzeichnet, daß die Anzahl von Öffnungen (34, 36) in jedem der ersten (12) und zweiten (14) Abschnitte eine ungerade Anzahl ist.

3. Rotor nach Anspruch 2, dadurch gekennzeichnet, daß die Anzahl von Öffnungen (34, 36) in jedem der ersten (12) und zweiten (14) Abschnitte eine Primzahl ist.

4. Rotor nach einem der Ansprüche 1 bis 3, dadurch gekennzeichnet, daß die Gesamtfläche der Einlaßöffnungen (34), welche durch den ersten Abschnitt (12) des Rotors hindurchtreten, im wesentlichen gleich der Gesamtfläche der Einlaßöffnungen (36) ist, welche durch den zweiten Abschnitt (14) des Rotors hindurchtreten.

5. Rotor nach einem der Ansprüche 1 bis 4, dadurch gekennzeichnet, daß die Anzahl von Schaufeln (26) eine von der Anzahl der Öffnungen (34, 36) entweder im ersten (12) oder zweiten (14) Abschnitt des Rotors verschiedene Anzahl ist.

6. Rotor nach Anspruch 5, worin die Anzahl von Schaufeln (26) eine Primzahl ist.

## Revendications

1. Disque de frein (10) agencé de façon à tourner avec un élément et présentant deux surfaces annulaires (16, 18) de frottement, tournées dans des directions opposées, qui, lors de l'actionnement du frein, sont engagées par des blocs de matière de frottement afin de ralentir le disque et donc l'élément, le disque comportant une première partie (12) qui présente l'une desdites surfaces annulaires, et une seconde partie (14) qui présente l'autre desdites surfaces annulaires, lesdites première et seconde parties étant agencées dans une disposition parallèle et espacée et étant reliées par des ailettes (26) entre lesquelles sont définis des canaux de refroidissement (28) s'étendant radialement vers l'extérieur du disque, les canaux étant agencés de manière que, lorsque le disque est en rotation, de l'air passe dans les canaux et agisse de façon à refroidir le disque, caractérisé en ce que le disque définit des orifices (34, 36) d'entrée d'air passant à travers lesdites première et seconde parties de ce disque dans des zones qui sont situées radialement vers l'intérieur desdites ailettes, les orifices d'entrée d'air étant agencés de façon à communiquer avec lesdits canaux, le nombre desdits orifices (34) qui passent à travers ladite première partie du disque étant différent du nombre desdits orifices (36) qui passent à travers ladite seconde partie.

2. Disque selon la revendication 1, caractérisé en ce que le nombre d'orifices (34, 36) dans chacune desdites première (12) et seconde (14) parties est un nombre impair.

3. Disque selon la revendication 2, caractérisé en ce que le nombre d'orifices (34, 36) dans chacune desdites première (12) et seconde (14) parties est un nombre premier.

4. Disque selon l'une quelconque des revendications 1 à 3, caractérisé en ce que l'aire totale des orifices d'entrée (34) passant à travers la première partie (12) du disque est sensiblement égale à l'aire totale des orifices d'entrée (36) passant à travers la seconde partie (14) du disque.

5. Disque selon l'une quelconque des revendications 1 à 4, caractérisé en ce que le nombre d'ailettes (26) est un nombre différent du nombre d'orifices (34, 36) dans chacune de la première (12) ou de la seconde partie (36) du disque.

6. Disque selon la revendication 5, dans lequel le nombre d'ailettes (26) est un nombre premier.
